# EUROPÄISCHE PATENTSCHRIFT

(11) **EP 1 170 964 B1**
(45) Veröffentlichungstag und Bekanntmachung des Hinweises auf die Patenterteilung: **25.10.2006**
(21) Anmeldenummer: 01104382.5
(22) Anmeldetag: 23.02.2001
(51) Int. Cl.: H04Q 3/66

(54) **Verfahren zur Herstellung einer Verbindung in einem Leitungsnetz**
Method to establish a connection in a network
Méthode pour établir une connexion dans un réseau

(30) Priorität: 28.06.2000 DE 10031557
(43) Veröffentlichungstag der Anmeldung: 09.01.2002
(73) Patentinhaber: Tenovis GmbH & Co. KG, 60326 Frankfurt am Main (DE)
(72) Erfinder: Ruhland, Klaus, D-85716 Unterschleissheim (DE)
(74) Vertreter: Tergau & Pohl Patentanwälte

(56) Entgegenhaltungen:
- WO-A-99/33232
- US-A- 5 732 072
- US-A- 6 016 306
- DIJKSTRA E W: "NOTE ON TWO PROBLEMS IN CONNEXION WITH GRAPHS" NUMERISCHE MATHEMATIK, SPRINGER VERLAG, BERLIN,, DE, Bd. 1, 1959, Seiten 269-271, XP000837527 ISSN: 0029-599X

## Beschreibung

### Technisches Gebiet

Die Erfindung betrifft ein Verfahren zur Herstellung einer Verbindung zwischen einem Anfangspunkt und einem Endpunkt in einem Leitungsnetz, insbesondere in einem Schwachstrom- und/oder Glasfaserkabelnetz.

### Stand der Technik

Beim Betreiben von Leitungsnetzen wie zum Beispiel Telefonnetzen, lokalen Datennetzwerken (Local Area Networks, LAN) oder Flächenverkabelungen stellt sich häufig das Problem, dass ein neuer physikalischer Leitungsweg zwischen einem vorgegebenen Anfangspunkt und einem vorgegebenen Endpunkt hergestellt werden muss. Dieses Problem tritt insbesondere bei der Neuschaltung oder dem Umzug von Rufnummern in einem Telefonnetz oder der Neuschaltung beziehungsweise dem Umzug eines Dienstes wie zum Beispiel eines Druckers in einem LAN auf. Die Ermittlung eines derartigen physikalischen Weges über freie Verbindungen ist die Voraussetzung für die Erstellung von sogenannten Schaltaufträgen, anhand derer die entsprechenden Rangierungen und Patchungen von einer ausführenden Person durchgeführt werden können.

Aus dem Dokument US 5 732 072 ist ein Verfahren zum adaptiven Routing in einem Kommunikations-Netzwerk aus aktiven Knoten bekannt.

### Darstellung der Erfindung, Aufgabe, Lösung, Vorteile

Aufgabe der vorliegenden Erfindung war es, ein universelles Verfahren bereitzustellen, mit dem die Herstellung einer Verbindung zwischen einem Anfangspunkt und einem gegebenen Endpunkt in einem Leitungsnetz möglich ist, insbesondere die Erstellung von Schaltaufträgen in der Telekommunikation, wie vor allem bei der Telefonie, bei LAN und bei der Flächenverkabelung im Schwachstrom- und im Glasfasernetzbereich.

Diese Aufgabe wird durch ein Verfahren mit den in Anspruch 1 angegebenen Merkmalen gelöst. Vorteilhafte Ausgestaltungen sind in den Unteransprüchen enthalten.

Das Verfahren zur Herstellung einer Verbindung zwischen einem vorgegebenen Anfangspunkt und einem vorgegebenen Endpunkt in einem Leitungsnetz mit als Schaltungen von passiven Bauelementen ausgeführten Knoten enthält demnach folgende Schritte:
a) Erstellung einer Datenbank der Knoten des Leitungsnetzes mit Informationen über die Verbindungen zwischen den Knoten,
b) Berechnung des in Hinblick auf ein vorgegebenes Optimierungskriterium optimalen Weges vom Anfangspunkt zum Endpunkt über freie Verbindungen, wobei die Berechnung nach dem Algorithmus von Dijkstra erfolgt,
c) Ermittlung und Ausführung der notwendigen Schaltvorgänge an den Knoten des Leitungsnetzes, damit die Kopplung der zum ermittelten optimalen Weg gehörigen Knotenverbindungen hergestellt werden kann.

Einen Ausgangspunkt des Verfahrens bildet somit die Dokumentation des Leitungsnetzwerks mit den dazugehörigen Verbindungen und Netzwerkkomponenten in einer Datenbank. Diese Dokumentation lässt sich mit Hilfe bekannter Datenbank-Software erstellen.

Die Datenbank bildet die Grundlage für die in Schritt b) erfolgende Wegsuche unter Beachtung eines vorgegebenen Optimierungskriteriums. Die Wegsuche stützt sich auf das aus dem Operations Research bekannte Optimierungsverfahren von Dijkstra (vgl. Dijkstra, E.W.: "A Note on two problems in connexion with graphs", Numerische Mathematik 1 (1959), 269 - 271).

Nach Bestimmung des optimalen Weges vom Anfangspunkt zum Endpunkt erfolgt im letzten Schritt vorzugsweise unter erneutem Rückgriff auf die Datenbank die Ermittlung der notwendigen Schaltvorgänge, die an den Knoten des Leitungsnetzes durchzuführen sind, um die freien Verbindungen zwischen den Knoten in der Weise zu koppeln, dass der ermittelte Verbindungsweg vom Anfangspunkt zum Endpunkt entsteht. Das Verfahren wird dadurch abgeschlossen, dass die ermittelten Schaltvorgänge physikalisch ausgeführt werden. Dies kann automatisch oder durch eine Betriebsperson erfolgen.

Der Vorteil des erfindungsgemäßen Verfahrens ist, dass es universell in verschiedenen Leitungsnetzen eingesetzt werden kann. Das Verfahren ist dabei unabhängig von der Anzahl der Netzwerkknoten beziehungsweise Verteilerpunkte im Netzwerk, der Verkabelungstopologie sowie der Nutzung des Netzwerkes.

Bei dem Leitungsnetz handelt es sich vorzugsweise um ein Schwachstromnetz und/oder ein Glasfaserkabelnetz. Die Nutzung dieses Leitungsnetzes kann als Telefonnetz, als LAN und/oder als Flächenverkabelung erfolgen. In den genannten Netzen und Anwendungsfällen sind häufig neue Verbindungen zwischen Anfangspunkten und Endpunkten herzustellen, so dass das universelle Verfahren hier einen großen Nutzen entfalten kann.

Zu den in der Datenbank gespeicherten Informationen gehört vorzugsweise die Anzahl der Verbindungen zwischen den Knoten sowie die Leitungsparameter der jeweiligen Verbindungen. Zu den Leitungsparametern gehört insbesondere die Materialart der Verbindung, also zum Beispiel die Information, ob die Leitung ein Kupferkabel, ein Lichtwellenleiter oder dergleichen ist. Darüber hinaus können Leitungseigenschaften wie die Dämpfung, die Kapazität, der Widerstand oder dergleichen gespeichert sein.

Weiterhin enthält die Datenbank vorzugsweise Informationen über die Leitungsparameter der Knoten des Leitungsnetzes. Bei den Knoten handelt es sich in der Regel eine Schaltung von passiven Bauelementen, deren Eigenschaften vorzugsweise bekannt sein sollten, um hieraus genaue Rückschlüsse auf die Leitungseigenschaften des herzustellenden Verbindungsweges zu ziehen.

Das Optimierungskriterium, mit welchem im zweiten Schritt des Verfahrens der optimale Weg zwischen dem Anfangspunkt und dem Endpunkt bestimmt wird, ist vorzugsweise auf eine Minimierung der auszuführenden Schaltvorgänge in den Knoten, auf eine Minimierung der Weglänge der Verbindung, auf eine Minimierung der Dämpfung der Verbindung und/oder auf eine Minimierung des Gesamtwiderstandes der Verbindung gerichtet. Selbstverständlich können auch beliebig gewichtete Kombinationen dieser Optimierungskriterien angewendet werden.

### Bester Weg zur Ausführung der Erfindung

Im Folgenden wird das Verfahren mit Hilfe einer Figur und anhand von Ausführungsbeispielen näher erläutert.

Grundlage der Erfindung bildet die Dokumentation 10 eines bestehenden Schwachstrom-Kabelnetzes. Dabei müssen folgende Informationen für die Lösung der freien Wegsuche vorliegen:
- Liste aller Knotenpunkte im Netzwerk. Im Schwachstrom-Kabelnetz ist das die Liste aller Verteiler und deren passiven Einbaukomponenten;
- Liste aller Kabel, die die Knotenpunkte verbinden. Für alle Adern/Fasern der Kabel müssen die genauen Anschlußpunkte, der Status (frei für die Wegsuche oder nicht), die Materialeigenschaften (Kupfer oder Lichtwellenleiter) und die Werte, nach denen die Wegsuche optimiert werden soll, bekannt sein.

Die allgemeine Aufgabenstellung der freien Wegsuche in einem Schwachstromkabelnetz lautet:
Gesucht ist mit der Vorgabe
   - Anfangspunkt (die genaue Bezeichnung eines Netzwerkknotenpunkts, d.h. eines Steckplatzes in einem Verteiler)
   - Endpunkt (die genaue Bezeichnung des Netzwerkknotenpunkts, d.h. eines Steckplatzes in einem Verteiler)
   - Optimierungskriterium
   - Anzahl Adern/Fasern
   - Material
   ein optimaler freier Kabelweg zwischen Anfangs- und Endpunkt, mit genauen Angaben der
   - Rangierungen bzw. Patches mit genauen Anschlußpunkten in den Netzwerkknoten, die notwendig sind, um den freien Weg zu schalten, und der Kabel und deren freien Adern/Fasern über die der freie Weg führt.

Die allgemeine Lösung der freien Wegsuche in einem Schwachstromkabelnetz erfolgt über zwei zentrale Schritte.

Im ersten Schritt 15 findet der Algorithmus von Dijkstra Anwendung. Hierfür wird aus allen Kabelverbindungen mit freien Adern und dem vorgegebenen Material eine Liste von Verbindungen zwischen Netzwerkknoten aufbereitet, die insbesondere die Werte des Optimierungskriteriums beinhalten. Das Ergebnis des Algorithmus von Dijkstra ist eine Liste von Netzwerkknoten bzw. Verteilerpunkten, über die der optimalen freie Weg geht.

Im zweiten Schritt 16 werden aus dieser Liste von Netzwerkknoten bzw. Verteilerpunkten die Rangierungen und Patches sowie die genauen freien Adern/Fasern der Kabel ermittelt, die den optimalen freien Weg ergeben.

Werden von dem Dokumentationssystem zusätzlich verschiedene Rangier- bzw. Patchkabeltypen mit Verbindungseigenschaften vorgegeben, wird darüber hinaus noch eine Konsistenzüberprüfung ermöglicht.

Im letzten Schritt 17 erfolgt schließlich die physikalische Ausführung der ermittelten Schaltauftrages.

### Wegsuche in der Telefonie 11

Speziell für den Netzwerkbetrieb 11 in der Telefonie sind die Neuschaltung und der Umzug einer Rufnummer zentrale Aufgabenstellungen, die zur Problemstellung der freien Wegsuche führen.

Für die Neuschaltung einer Rufnummer in einem Schwachstrom-Kabelnetz ist dabei die folgende zur allgemeinen freien Wegsuche modifizierte Aufgabenstellung gegeben:
Gesucht ist mit den Vorgaben
   - TK-Anlagenport mit neuer Rufnummer
   - Dose (d.h. Anschlusspunkt im Raum, an dem das jeweils benötigte Endgerät wie z.B. Telefon oder Fax angeschlossen werden kann)
   - Anzahl DA (Doppeladern)
   - Optimierungskriterium
   - Material
   ein optimaler freier Kabelweg zwischen dem TK-Anlagenport und einer Dose mit genauen Angaben der
   - Rangierungen bzw. Patches mit genauen Anschlußpunkten in den Netzwerkknoten, die notwendig sind, um den freien Weg zu schalten, und der Kabel und deren freien Adern/Fasern über die der freie Weg führt.

Zur Lösung der Neuschaltung einer Rufnummer sind die folgenden weiteren Informationen in der Dokumentation 10 des Schwachstrom-Kabelnetzes notwendig:
- Dokumentation aller Dosen und deren Verbindungen zu den Knotenpunkten im Netzwerk bzw. Verteilern mit genauen Anschlußpunkten.
- Dokumentation aller TK-Anlagenports und deren genauen Anschlußpunkten in einem Netzwerkknoten bzw. Verteiler (Systemseite des TK-Anlagenports).

Zur Lösung der freien Wegsuche in der Telefonie bzw. zur Neuschaltung einer Rufnummer wird als Anfangspunkt die Systemseite des TK-Anlagenports und als Endpunkt der Anschlußpunkt der Dose in einem Netzwerkknoten bzw. Verteiler gewählt. Anschließend kommt die allgemeine Lösung der freien Wegsuche zur Anwendung.

Eine weitere zentrale Aufgabenstellung ist der Telefonie ist der Umzug einer Rufnummer auf eine andere Dose. Eine bestehende Rufnummer soll dabei auf eine andere Dose umgezogen werden, d.h. mit den Vorgaben
- Rufnummer
- Dose
soll ein optimaler neuer freier Kabelweg zu der Dose gefunden werden mit genauen Angaben der Rangierungen bzw. Patches mit genauen Anschlußpunkten in den Netzwerkknoten, die notwendig sind, um den alten Weg aufzuheben, und Rangierungen bzw. Patches mit genauen Anschlußpunkten in den Netzwerkknoten, die notwendig sind, um den neuen Weg zu schalten, und der Kabel und deren freien Adern/Fasern, über die der freie Weg führt.

Zur Lösung des Umzugs einer Rufnummer wird als Anfangspunkt die Systemseite des TK-Anlagenports der bestehen Rufnummer und als Endpunkt der Anschlußpunkt der neuen Dose in einem Netzwerkknoten bzw. Verteiler gewählt. Anschließend kommt die allgemeine Lösung der freien Wegsuche zur Anwendung.

### Wegsuche in LAN-Netzwerken 12

Für LAN-Netzwerke, die sich häufig mit den Kabelnetzen der Telefonie überschneiden, wird folgende modifizierte Problemstellung zugrunde gelegt:
Gesucht ist mit den Vorgaben
   - Port einer aktiven LAN-Komponente in einem Netzwerkknoten/ Verteiler
   - Dose
   - Anzahl DA (Doppeladern) bzw. Fasern
   - Optimierungskriterium
   - Material
   ein optimaler freier Kabelweg zwischen der LAN-Komponente und einer Dose mit genauen Angaben der
   - Rangierungen bzw. Patches mit genauen Anschlußpunkten in den Netzwerkknoten, die notwendig sind, um den freien Weg zu schalten, und
   - der Kabel und deren freien Adern/Fasern, über die der freie Weg führt.

Zur Lösung der modifizierten Problemstellung für LAN-Netzwerke sind die folgenden weiteren Informationen in der Dokumentation des Schwachstromkabelnetzes notwendig:
- Dokumentation aller Dosen und deren Verbindungen zu den Knotenpunkten im Netzwerk bzw. Verteilern mit genauen Anschlußpunkten.
- Dokumentation aller aktiven LAN-Komponenten, die Netzwerkknoten bzw. Verteiler, in die diese eingebaut sind, und deren Ports.

Zur Lösung der freien Wegsuche für LAN-Netzwerke wird als Anschlußpunkt 1 der Port der aktiven LAN-Komponente und als Anschlußpunkt 2 der Anschlußpunkt der Dose in einem Netzwerkknoten bzw. Verteiler gewählt. Anschließend kommt die allgemeine Lösung des Problems zur Anwendung.

### Wegsuche in Flächenverkabelungen 13

Für Flächenverkabelungen liegt folgende Problemstellung zugrunde:
Gesucht ist mit den Vorgaben
   - NetzwerkknotenNerteiler 1
   - NetzwerkknotenNerteiler 2
   - Anzahl DA (Doppeladern) bzw. Fasern
   - Optimierungskriterium
   - Material
   ein optimaler freier Kabelweg zwischen den Netzwerkknoten 1 und Netzwerkknoten 2 mit genauen Angaben der
   - Anschlußpunkte in den Ausgangs-Netzwerkknoten 1 und 2, und den
   - Rangierungen bzw. Patches mit genauen Anschlußpunkten in den Netzwerkknoten, die notwendig sind, um den freien Weg zu schalten, und der Kabel und deren freien Adern/Fasern, über die der freie Weg führt.

Zur Lösung der modifizierten Problemstellung für Flächenverkabelungen sind keine weiteren Vorgaben an die Dokumentation notwendig, der allgemeine Algorithmus kann direkt angewendet werden.

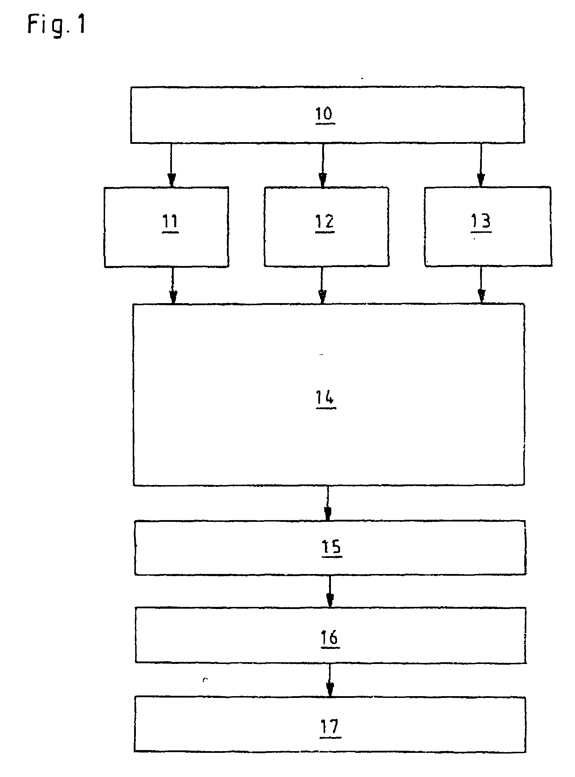

## Patentansprüche

1. Verfahren zur Herstellung einer Verbindung zwischen einem Anfangspunkt und einem Endpunkt in einem Leitungsnetz mit als Schaltungen von passiven Bauelementen ausgeführten Knoten, enthaltend folgende Schritte:
a) Erstellung einer Datenbank der Knoten des Leitungsnetzes mit Informationen über die Verbindungen zwischen den Knoten,
b) Berechnung des in Hinblick auf ein vorgegebenes Optimierungskriterium optimalen Weges vom Anfangspunkt zum Endpunkt über freie Verbindungen, wobei die Berechnung nach dem Algorithmus von Dijkstra erfolgt,
c) Ermittlung und Ausführung der notwendigen Schaltvorgänge an den Knoten des Leitungsnetzes, damit die Kopplung der zum ermittelten optimalen Weg gehörigen Verbindungen zwischen den Knoten hergestellt werden kann.

2. Verfahren nach Anspruch 1,
**dadurch gekennzeichnet, dass** das Leitungsnetz ein Schwachstromnetz und/oder ein Glasfaserkabelnetz ist.

3. Verfahren nach einem der Ansprüche 1 oder 2,
**dadurch gekennzeichnet, dass** das Leitungsnetz ein Telefonnetz, ein LAN oder eine Flächenverkabelung ist.

4. Verfahren nach mindestens einem der Ansprüche 1 bis 3,
**dadurch gekennzeichnet, dass** die in der Datenbank gespeicherten Informationen die Anzahl und/oder die Leitungsparameter der Verbindungen zwischen den Knoten enthalten.

5. Verfahren nach mindestens einem der Ansprüche 1 bis 4,
**dadurch gekennzeichnet, dass** die in der Datenbank gespeicherten Informationen die Leitungsparameter der Knoten des Leitungsnetzes enthalten.

6. Verfahren nach mindestens einem der Ansprüche 1 bis 5,
**dadurch gekennzeichnet, dass** das Optimierungskriterium auf die Minimierung der auszuführenden Schaltvorgänge in den Knoten, der Weglänge der Verbindung, der Dämpfung der Verbindung und/oder des Gesamtwiderstandes der Verbindung gerichtet ist.

## Claims

1. Method for producing a connection between a start point and an end point in a line network having nodes in the form of circuits of passive components, comprising the following steps:
a) setting up a database for the nodes in the line network with information items on the connections between the nodes,
b) calculating the optimum path as regards a predetermined optimization criterion from the start point to the end point via free connections, the calculation taking place on the basis of the Dijkstra algorithm,
c) determining and implementing the necessary switching operations at the nodes of the line network in order that the coupling of the connections associated with the optimum path determined can be produced between the nodes.

2. Method according to Claim 1, **characterized in that** the line network is a weak-current network and/or a fibre-optic cable network.

3. Method according to either of Claims 1 and 2, **characterized in that** the line network is telephone network, a LAN or surface wiring.

4. Method according to at least one of Claims 1 to 3, **characterized in that** the information items stored in the database contain the number and/or the line parameters of the connections between the nodes.

5. Method according to at least one of Claims 1 to 4, **characterized in that** the information items stored in the database contain the line parameters of the nodes of the line network.

6. Method according to at least one of Claims 1 to 5, **characterized in that** the optimization criterion is directed towards the minimization of the switching operations to be carried out in the nodes, the path length of the connection, the attenuation of the connection and/or the total resistance of the connection.

## Revendications

1. Procédé d'établissement d'une connexion entre un point de départ et un point d'arrivée dans un réseau de lignes ayant des noeuds réalisés sous la forme de circuits de composants passifs, comprenant les stades suivants :
a) on établit une banque de données des noeuds du réseau de lignes ayant des informations sur les connexions entre les noeuds,
b) on calcule le trajet le meilleur au regard d'un critère d'optimisation prescrit du point de départ au point d'arrivée par des connexions libres, le calcul s'effectuant suivant l'algorithme de Dijkstra,
c) on détermine et on réalise les processus de commutation nécessaires sur les noeuds du réseau de lignes afin de pouvoir établir le couplage des connexions entre les noeuds appartenant au trajet le meilleur déterminé.

2. Procédé suivant la revendication 1, **caractérisé en ce que** le réseau de lignes est un réseau de courant faible et/ou un réseau de câbles en fibres de verre.

3. Procédé suivant l'une des revendications 1 ou 2, **caractérisé en ce que** le réseau de lignes est un réseau téléphonique, un LAN ou un câblage en surface.

4. Procédé suivant au moins l'une des revendications 1 à 3, **caractérisé en ce que** les informations mémorisées dans la banque de données contiennent le nombre et/ou les paramètres de lignes des connexions entre les noeuds.

5. Procédé suivant au moins l'une des revendications 1 à 4, **caractérisé en ce que** les informations mémorisées dans la banque de données contiennent les paramètres de lignes des noeuds du réseau de lignes.

6. Procédé suivant au moins l'une des revendications 1 à 5, **caractérisé en ce que** le critère d'optimisation vise la minimisation des processus de commutation à exécuter dans les noeuds des longueurs de trajets de la connexion de l'atténuation de la connexion et/ou de la résistance globale de la connexion.
